# EUROPÄISCHE PATENTSCHRIFT

(11) **EP 2 847 799 B1**
(45) Veröffentlichungstag und Bekanntmachung des Hinweises auf die Patenterteilung: **05.08.2020**
(21) Anmeldenummer: 13730462.2
(22) Anmeldetag: 07.05.2013
(51) Int. Cl.: H02S 20/25, F24S 25/00

(54) **DACHSTEIN, ANORDNUNG AUS DACHSTEINEN UND VERFAHREN ZUR HERSTELLUNG EINES DACHSTEINS**
ROOF TILE, ARRANGEMENT COMPRISING ROOF TILES, AND METHOD FOR PRODUCING A ROOF TILE
TUILE EN BÉTON, ENSEMBLE CONSTITUÉ DE TUILES EN BÉTON ET PROCÉDÉ DE FABRICATION D'UNE TUILE EN BÉTON

(30) Priorität: 07.05.2012 DE 102012008852
(43) Veröffentlichungstag der Anmeldung: 18.03.2015
(73) Patentinhaber: Autarq GmbH & Co. KG, 20357 Hamburg (DE)
(72) Erfinder: PAUL, Cornelius, 20357 Hamburg (DE)
(74) Vertreter: Castell, Klaus
(86) Internationale Anmeldenummer: PCT/DE2013/000251
(87) Internationale Veröffentlichungsnummer: WO 2013/167110

(56) Entgegenhaltungen:
- DE-A1- 1 900 069
- DE-A1- 3 247 467
- DE-U1-202008 008 684
- US-A1- 2008 302 031

## Beschreibung

Die Erfindung betrifft einen Dachstein mit einem Solarmodul und einem plattenförmigen Grundkörper aus Gussmaterial, eine Anordnung aus Dachsteinen und ein Verfahren zum Herstellen eines Dachsteins.

Ein gattungsgemäßer Dachstein, bei dem der Grundkörper mindestens zwei Löcher aufweist, in denen Leitungen geführt sind, ist aus der DE 1 900 069 A1 bekannt. Dieser Dachziegel besteht beispielsweise aus gebranntem Ton oder Zement. Er kann aber auch aus Kunststoff gefertigt sein. Einen ähnlichen Dachstein zeigt die DE 32 47 467 A1. Dessen Grundkörper ist vorzugsweise aus Silikatglas, insbesondere Pressglas hergestellt. Gemäß der US 2008/0302031 A1 wird der Grundkörper aus einem Polypropylenmaterial hergestellt. Er könne aber auch aus Zement hergestellt sein.

Während ein Dachziegel aus Ton und Lehm gebrannt wird, wird ein Dachstein, aus Beton gepresst. Durch das Brennen eines Dachziegels kann es zu Verformungen kommen. Dachsteine aus Beton werden hergestellt, in dem erdfeuchter Beton in eine offene Form gegeben wird und mit einer Walze darüber gerollt wird, um den Beton in die Form zu pressen und dem Pressling eine spezielle Formgebung zu verleihen.

Auch die DE 20 2008 008684 U1 zeigt einen Dachstein mit einem plattenförmigen Grundkörper, der zwei Löcher, in denen Leitungen geführt sind, aufweist. Der Erfindung liegt die Aufgabe zu Grunde, derartige Dachsteine weiter zu entwickeln. Diese Aufgabe wird mit einem gattungsgemäßen Dachstein gelöst, bei dem der Grundkörper mindestens zwei Löcher aufweist, in denen Leitungen geführt sind, und der ein Solarmodul (11) aufweist, das auf maximal 60 Volt Spannung und circa 6 bis 20 Watt Leistung ausgelegt ist, wobei das Solarmodul ca. 50 bis 100 kleine Siliziumzellen aufweist und eine Spannung von ca. 50 Volt und einen Strom von nur etwa 0,2 Ampere abgibt.

Vorteilhaft ist es, wenn das Gussmaterial ein wasserfester fließfähiger Beton als anorganisches Gussmaterial ist.

Das Gießen eines wasserfesten fließfähigen Betons ermöglicht die Herstellung von Dachsteinen in unterschiedlichen Formen und in kleinen Stückzahlen mit einer speziellen für den Einsatz als Photovoltaikbauteil geeigneten Form.

Das Führen von Leitungen im Grundkörper eines Dachsteins erschließt neue Möglichkeiten, Solarkollektoren zur Erzeugung von Strom oder Warmwasser in oder auf dem Grundkörper eines Dachsteins anzuordnen. Die Anordnung derartiger Löcher im Grundkörper des Dachsteins ermöglicht es, den Solarkollektor mit Wasser oder Strom zu versorgen. Dabei kann ein Loch als Zuleitung und ein Loch als Ableitung verwendet werden. Durch die beabstandete Führung von zwei Leitungen im Grundkörper des Dachsteins erschließen sich neue Funktionen zum Einsatz des Dachsteins.

Das Vorsehen von zwei Löchern im Grundkörper beschreibt einen Aspekt der Erfindung. Daneben beschreiben die Unteransprüche weitere Aspekte der Erfindung, die auch ohne dieses Merkmal erfindungswesentlich sind.

Vorteilhaft ist es, wenn die Leitungen elektrische Leitungen sind. Dadurch können die frei auf der Dachinnenseite geführten Leitungen sehr kurz gehalten werden und es ist sofort ersichtlich, welche Leitungen nach dem Einbau der Dachsteine miteinander zu verbinden sind.

Insbesondere wenn in den Löchern Leitungen oder Kabel geführt sind, ist es vorteilhaft wenn die Leitungen gegen das Gussmaterial abgedichtet sind. Als Dichtmaterial eignet sich beispielsweise Silikon oder ein anders aushärtendes oder dauerelastisches Material. Das Dichtmaterial im Loch dichtet somit gegen eindringende Feuchtigkeit ab.

Vorteilhaft ist es, wenn die Löcher Kanäle senkrecht zur plattenförmigen Erstreckung des Grundkörpers bilden. Dadurch wird es möglich, auf einfache Art und Weise Leitungen von der Dachsteinvorderseite zur Dachsteinrückseite zu führen.

Derartige Löcher können jedoch auch zur Gewichtsreduktion des Dachsteins dienen. Insbesondere wenn auf dem Grundkörper Solarmodule angeordnet sind, können unter den Modulen Löcher zur Gewichtsreduktion der Grundkörper vorgesehen werden, ohne dass die Funktion des Dachsteins dadurch beeinträchtigt wird.

In diesen Löchern können Leitungen geführt sein. Der Vorteil einer Gewichtsreduktion erschließt sich jedoch auch, wenn in den Löchern keine Leitungen geführt sind. Vorteilhaft ist es, wenn die Löcher in Flussrichtung des durch den Grundkörper abzuleitenden Regenwassers beabstandet angeordnet sind. Die Löcher liegen dann nicht waagerecht nebeneinander sondern in Flussrichtung des Regenwassers untereinander oder versetzt zueinander auf einer zum Dachstein diagonalen Linie. Wenn in den Löchern Kabel geführt sind, verkürzt sich dadurch der Abstand eines jeden Loches zu der nächsten Dachlatte. Wenn an der Dachlatte Kabel oder Anschlüsse vorgesehen sind, werden nur kürzere Kabel zwischen Dachstein und Anschluss benötigt und es ist selbsterklärend, welches Kabel mit welchem Anschluss zu verbinden ist.

Zur Gewichtsreduktion und insbesondere auch zur Kühlung bei Grundkörpern von Dachsteinen wird vorgeschlagen, dass die Löcher Kanäle längs zur plattenförmigen Erstreckung des Grundkörpers bilden. Diese Kanäle können zum Führen von Leitungen dienen. Sie können jedoch auch direkt ohne Leitungen ein Fluid, wie beispielsweise, Kühlluft oder Kühlwasser führen. Auch leere Kanäle ohne Kühlfunktion sind vorteilhaft, wenn sie durch ihre Anordnung das Gewicht des Dachsteins reduzieren, ohne dessen Stabilität wesentlich zu beeinflussen.

Derartige Dachsteine können aus Gussmaterialien wie beispielsweise Kunstoffen hergestellt werden. Vorteilhaft ist es, wenn das Gussmaterial ein anorganisches Gussmaterial ist. Insbesondere wasserfeste Betonarten eignen sich für die Herstellung von Dachsteinen.

Eine besondere Ausführungsvariante sieht vor, dass der Dachstein ein Solarmodul mit einer Glasscheibe aufweist. Als Solarmodul eignet sich besonders eine Anordnung (Matrix) kristalliner Solarzellen oder eine Matrix aus Dünnschichtzellen. Die Matrix liegt dann zwischen der Glasscheibe und dem Grundkörper des Dachsteins. Dabei bildet der Grundkörper des Dachsteins eine stabile und wasserdichte Grundlage und die Glasscheibe bildet eine langlebige, witterungsbeständige Oberfläche für den Dachstein.

Vorteilhaft ist es daher, wenn der Solardachstein einen Grundkörper aus Beton, ein darauf angeordnetes Dichtmaterial, eine darauf angeordnete Solarmatrix und eine darauf angeordnete Glasscheibe aufweist. Dieser Aufbau ermöglicht es, dass die Glasscheibe eine Dicke von weniger als 4 mm, vorzugsweise sogar weniger als 2 mm, aufweist. Dabei ist es möglich sogar Scheiben aus ungehärtetem Glas zu verwenden.

Da Dachsteine aus einem Gussmaterial in beliebigen Farben herstellbar sind, wird vorgeschlagen, dass der Dachstein ein Solarmodul aufweist und dass Gussmaterial etwa die Farbe des Solarmoduls hat. Das Gussmaterial kann auch bemalt werden. Außerdem kann der Dachstein vom Solarmodul so bedeckt sein, dass im Wesentlichen nur noch Solarmodule auf der Dachfläche zu sehen sind. Sofern bei einer Draufsicht auf die Dachfläche jedoch noch Bereiche des Grundkörpers zu sehen sind, ist es vorteilhaft, wenn zumindest diese Bereiche des Grundkörpers die Farbe des Solarmoduls aufweisen.

Ein Dachstein hat an seiner der Witterung ausgesetzten Oberseite eine möglichst ebene Fläche. Manchmal ist diese Fläche unter Bildung von Wasserablaufrinnen gewellt. Außerdem weisen Dachsteine auf ihrer Rückseite spezielle Formgebungen auf, die die Befestigung an einer Dachlatte erleichtern.

Vorteilhaft ist es jedoch, wenn ein Dachstein ein Solarmodul und auf der Seite des Solarmoduls angeordnete Stege aufweist. Dies ermöglicht es das Solarmodul auf dem Grundkörper des Dachsteins zu positionieren oder den Dachstein durch die Stege zu stabilisieren. Auch quer zur Wasserablaufrichtung angeordnete Stege beeinträchtigen die Funktion des Dachsteins nicht, sofern der Dachstein ein Solarmodul aufweist und die Stege über die Oberseite des Solarmoduls nicht oder nicht wesentlich vorstehen. Das Vorsehen von Stegen am Grundkörper des Dachsteins erhöht jedoch die Stabilität des Dachsteins und ermöglicht es, möglichst leichte Grundkörper für Dachsteine mit Solarmodulen herzustellen.

Um einen Einbau von Dachsteinen mit Solarmodulen zu erleichtern, ist das Solarmodul auf maximal 60 V wie beispielsweise ca. 20 bis 60 Volt Spannung und 6 bis 20 Watt wie beispielsweise ca. 8 bis 12 Watt Leistung ausgelegt. Da die Leistung von der Sonneneinstrahlung abhängt, können nur ungefähre Angaben vorgenommen werden. Die angegebenen Zahlen betreffen die Leistung des Solarmoduls bei den für die Photovoltaik allgemein gültigen Standard Test Konditionen STC (Temperatur 25 °C, Strahlungsstärke 1000 W/m², Einfallswinkel der Strahlung 48 Grad und Lichtspektrum AM 1,5)

Um die Leistung einzelner Dachsteine gemeinsam zu nutzen wird vorgeschlagen, dass die Dachsteine über eine Parallelschaltung miteinander verbunden sind. Das heißt, dass vorzugsweise parallel zu einer horizontalen Dachlatte eine Zuleitung und eine Ableitung verlegt werden, die über mehrere dazwischen geschaltete Solarmodule miteinander verbunden sind.

Die Zuleitung und die Ableitung sind räumlich mehrere Zentimeter wie beispielsweise 3 bis 10 cm voneinander getrennt, um Kurzschlüsse durch beispielsweise Tierfraß und Brandgefahr zu vermeiden. Vorteilhaft ist es, wenn die Zuleitung und die Ableitung auf verschiedenen, vorzugsweise gegenüberliegenden Seiten einer Dachlatte angeordnet sind. Dadurch sind Zu- und Ableitung einerseits zumindest durch die dazwischen liegende Dachlatte voneinander getrennt und andererseits durch den Abstand zwischen den Dachlatten. Der Strom fließt somit von der Zuleitung zur Ableitung durch mehrere parallel geschaltete Solarmodule. Dies führt dazu, dass die Verschattung eines Solarmoduls nur zu einer Reduktion der Systemleistung um die Leistung des einzelnen Solarmoduls führt. Außerdem bleibt die Spannung zwischen Zu- und Ableitung konstant, während die Leistung bzw. der Strom von der Anzahl der zwischen Zu- und Ableitung eingesetzten Solarmodule abhängt. Durch die konstant gehaltene Spannung wird die Auslegung leistungsfähiger Hochsetzsteller mit geringen Verlusten und hoher Effizienz ermöglicht.

Damit auf dem Dach nicht zu große Ströme entstehen, wird vorgeschlagen, dass die Dachsteine zu Blöcken mit jeweils 1 bis 3 kW, vorzugsweise etwa 2 kW, zusammengefasst sind. Beispielsweise können 200 Solardachsteine mit jeweils einem 10 W Solarmodul zu einem 2 kW Block zusammengefasst werden. Die 50 Volt Leitungen werden dann zu einem 2 kW Wechselrichter geführt, der daraus eine Wechselspannung von z.B. 240 V AC oder 380 V AC zur Einspeisung ins Wechselstromnetz erzeugt. Wechselrichter mit einer Leistung von jeweils 2 kW können auf der Wechselstromseite wiederum in beliebiger Anzahl parallel geschaltet werden.

Um Kurzschlüsse zu vermeiden ist vorgesehen dass die Dachsteine zwischen Dachlatten angeordnet sind, Kabel vom Dachstein zu an den Dachlatten geführten Leitungen führen und diese Leitungen mehr als 3 cm und vorzugsweise sogar mehr als 10 cm zueinander beabstandet sind.

Die der Erfindung zu Grunde liegende Aufgabe wird auch mit einem Verfahren zum Herstellen eines derartigen Dachsteins gelöst, bei dem ein Dachziegel oder Dachstein digitalisiert wird, das Modell so überarbeitet wird, dass auf einer Oberseite eine ebene Fläche zum Anbringen eines Solarmoduls entsteht, zum Modell eine Gussform erstellt wird, in der Dachsteingrundkörper gegossen werden, und je ein Solarmodul am Grundkörper befestigt wird.

Dies erschließt die Möglichkeit, für ein einziges Dach Dachsteine mit Solarmodulen bereitzustellen, bei denen die Form des Grundkörpers im Wesentlichen den auszutauschenden Ziegeln entspricht. Hierzu wird der auszutauschende Dachziegel wird so überarbeitet, d.h. auf der Oberfläche wird eine ebene Fläche erzeugt, dass auf einem gegossenen Grundkörper ein Solarmodul angebracht werden kann. Vorzugsweise wird der Ziegel zuerst digitalisiert und dann wird das Modell überarbeitet. Dies führt dazu, dass das Solarmodul durch den Grundkörper, an dem es anliegt, stabilisiert wird und ein Solardachstein entsteht, mit dem herkömmliche Ziegel oder herkömmliche Dachsteine ersetzt werden können. Alle Anschlussstücke an andere Ziegel wie Falzen oder Nuten bleiben erhalten, damit der neue Dachstein mechanisch weiterhin in das alte System passt.

Das Verfahren eignet sich als dezentrales Herstellungsverfahren für kleinere Chargen in der Nähe der Dächer, an denen herkömmliche Ziegel durch Solardachsteine ersetzt werden sollen.

Eine einfache Verfahrensvariante sieht vor, dass die Gussform einen Blister aus Kunststoff aufweist. Derartige Blister können kostengünstig hergestellt werden und ermöglichen es, die Grundformen günstig zu gießen. Vorteilhaft ist es dabei, wenn die Blister in einer äußeren Stützform, wie beispielsweise aus Schaummaterial gehalten werden. Eine weitere Verfahrensvariante sieht vor, dass die Gussformen direkt aus Schaumstoff hergestellt werden. Dabei kann sogar auf einen Blister verzichtet werden, wenn das Schaummaterial ausreichend glatt ausgebildet ist, sodass das Schaummaterial direkt die Gussform bildet. Die Schaumstoff Formen weisen eine spezielle Oberfläche auf oder sind mit einem Trennmittel behandelt, um das Anhaften von Beton zu verhindern.

Zur einfachen Herstellung derartiger Solarmodule können die Zellen des Solarmoduls in einen Kunststoff wie EVA, PVB, Silikon, Polyolefin oder ähnlichem gekapselt sein. Die Zellen können dadurch getrennt von der Herstellung des Dachsteingrundkörpers in das Einbettungsmaterial eingebracht werden, welches die Zellen schützt und es erlaubt, diese Zellen nach dem Gießen der Grundkörper mit den Grundkörpern zu verbinden.

Das Verkapselungsmaterial kann pigmentiert oder eingefärbt werden, damit der Dachstein beispielsweise wie ein roter Ziegel wirkt. Vorteilhaft hierfür sind Farbpigmenten in geringer Dichte. Dabei genügt es in der Regel, wenn das Material nur partiell pigmentiert oder eingefärbt wird, um den Eindruck eines gefärbten Dachsteins zu bewirken. Die Solarfläche erscheint dann nach außen hin rötlich, während trotzdem noch Licht durchgelassen wird.

Eine vorteilhafte Verfahrensfuhrung sieht vor, dass auf dem Grundkörper eine Zellmatrix aus Siliziumzellen mit einer Dichtschicht eingebettet wird, auf das noch weiche Dichtbett eine Frontscheibe aus Glas gelegt wird und elektrische Anschlüsse durch Löcher im Dachstein geführt werden. Alternativ können die einzelnen Schichten auch auf die Glasscheibe aufgelegt werden. Eine weitere vorteilhafte Verfahrensführung sieht daher vor, dass auf der Frontscheibe eine Zellmatrix aus Silizimzellen mit einer Dichtschicht eingebettet wird, danach auf den Beton-Grundkörper eine Dichtschicht aufgebracht wird, auf dieses noch weiche Dichtbett die Frontscheibe samt Zellmatrix aufgelegt wird, und die elektrischen Anschlüsse durch Löcher im Dachstein geführt werden.

Damit kann ein Teil der alten vorhandenen Dachziegel durch Solardachsteine ersetzt werden. Diese einfache Art der Montage durch Ersetzen, sowie die ungefährliche Schutzkleinspannung, das Entfallen komplizierter Planung (durch die Parallelschaltung) und das Verwenden einfacher Steckkontakte ermöglichen es selbst einem Laien, beispielsweise Bereiche auf der Südseite seines Daches mit Solardachsteinen auszurüsten, die Dachsteine mit Kabeln zu verbinden und diese von einem Elektriker an die elektrische Hausversorgung anschließen zu lassen.

Derartige Solardachsteine können auch aus einem Ziegelmaterial. Metall, Holz oder ähnlichem hergestellt werden. Besonders geeignet sind jedoch Gussmaterialien.

Außerdem muss ein Solardachstein nicht unbedingt auf einem Dach angebracht werden. Es eignen sich alle besonnten Flächen wie beispielsweise auch Wand- und Fassadenflächen.

Dadurch wird ein Dachstein geschaffen, der sich problemlos mechanisch an die vorhandenen Bestandsziegel anpasst (ohne Probleme mit der Dichtheit des Daches zu bekommen), und gleichzeitig als Träger für ein Solarmodul dienen kann. Der Dachstein ist vorzugsweise genauso kleinteilig wie die anderen Ziegel sein (d.h. nicht mehrere zusammenfassen).

Die Produktionsmethode soll auf jeden x-beliebigen Ziegel/Dachstein anwendbar sein. D.h. nur die Form wird getauscht, der komplette restliche Produktionsablauf bleibt derselbe. Der Abformungs- und Produktionsablauf soll so kostengünstig sein, dass er auch für Kleinserien geeignet ist

Vorzugsweise kann jeder x-beliebige Dachstein gescannt, nachgebildet, und auf seiner Oberfläche "eingeebnet" werden. D.h. alle Falzen, Nuten etc. (d.h. die mechanischen Anschlussstücke an das alte System) bleiben erhalten, und auf der flachen Oberfläche lässt sich ein Solarmodul installieren. Die Dachsteine werden dann in einem Gußverfahren mit einem speziell dafür entwickelten Beton gegossen.

Das Besondere liegt in dem adaptiven Verfahren, da es mit den bisherigen Verfahren nicht möglich ist, jeden beliebigen Dachstein/Ziegel nachzuformen und als Solardachstein zu verwenden. Sondern die Verfahren sind immer nur auf einige wenige Dachsteintypen begrenzt (zumindest was die wirtschaftliche Machbarkeit betrifft).

Der Dachdecker muss sich somit nur auf ein einziges Montageprinzip einstellen, welches er für alle Dachsteintypen verwenden kann, und nicht für das eine System von Hersteller A, das nächste System von Hersteller B etc. Im Gegenteil, dadurch dass jeder Ziegel abgebildet werden kann, ist es möglich, dass auch Laien das Produkt verwenden können, indem sie einfach die alten Ziegel vom Dach nehmen, und an ihre Stelle die neuen Solardachsteine legen.

Das elektrische System führt zu einem System, welches viele kleine Module ohne große elektrische Verluste verschalten kann (bei niedrigen Kosten). Es ist im Brandfall wegen der Schutzkleinspannung ungefährlich und es kann vom Laien verlegt werden.

Es wird durch Verschattung auf dem Dach nicht bzw. nur wenig beeinträchtigt. Es ermöglicht ohne aufwändige elektrische Planung das Verlegen der Solarmodule auf jedem beliebigen Dach und es hält dabei trotzdem die elektrischen Verluste gering.

Besonders vorteilhaft ist daher die folgende Kombination: Zellen werden kleingeschnitten, daher erzeugt jeder Solardachstein ca. 50 V und 0,2 A Durch die geringen Ströme können die vielen Kontaktstellen sehr billig werden. Die Solardachsteine werden elektrisch parallel geschaltet. Dadurch bleibt die Spannung gering. Das System ist daher von Laien montierbar und im Brandfall ungefährlich. Außerdem ist die niedrige Spannung ein weiterer Grund, warum die Kontaktstellen sehr billig werden können (kein Schutz benötigt). Auf dem Dach (bzw. in Dachnähe) wird ein Wechselrichter montiert, der aus der 50 V Gleichspannung eine Wechselspannung von z.B. 240 V AC oder 380 V AC zur Einspeisung ins Wechselstromnetz erzeugt.

Das Herstellungsverfahren ist auch in Kleinserien wirtschaftlich und lokal anwendbar. Dies wird durch das Gießverfahren gelöst, bzw. die entsprechend angepassten Schritte in der Modulfertigung.

Die verwendeten Materialien, wie insbesondere Beton und Einkapselungsmaterial sind langlebig. Im Gegensatz zu herkömmlichen Solarmodulen ist das "Betonmodul" sehr starr und damit unempfindlich gegen Belastung durch Wind, Schnee, etc. Daraus resultiert eine weitere Verbesserung der Langlebigkeit.

Die Stabilität des Betons ermöglicht es, das verwendete Frontglas deutlich dünner zu machen (höhere Transmission, Kostenreduktion, Gewichtsreduktion).

Ein vorteilhaftes Ausführungsbeispiel ist in der Zeichnung dargestellt und wird im Folgenden beschrieben.

Es zeigt
- Figur 1: ein digitales Abbild eines von einem Dach entnommenen Dachziegels,
- Figur 2: eine vergrößerte Abbildung einer für das Anbringen eines Solarmoduls überarbeiteten Form des in Figur 1 gezeigten Dachziegels,
- Figur 3: den in Figur 2 gezeigten Dachziegel als Dachstein mit aufgebrachtem Solarmodul als Explosionszeichnung
- Figur 4: eine Schaltung für eine Anordnung von Dachsteinen auf einem Dach,
- Figur 5: eine perspektivische Ansicht eines Solardachsteines zwischen zwei Latten auf einem Dach und

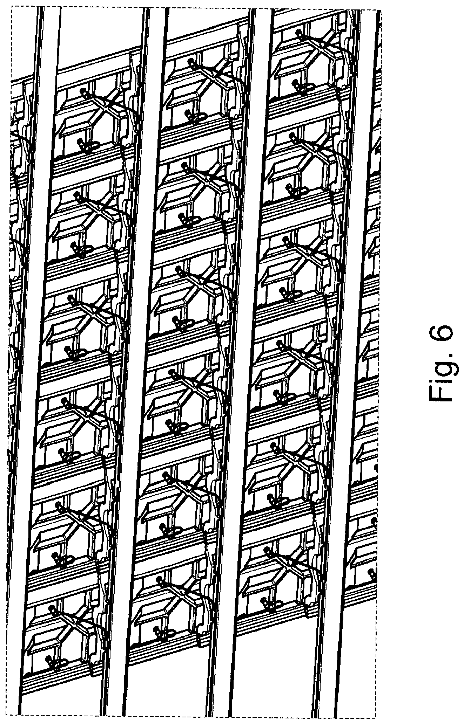

- Figur 6: eine Ansicht eines Dachausschnittes von dessen Rückseite.

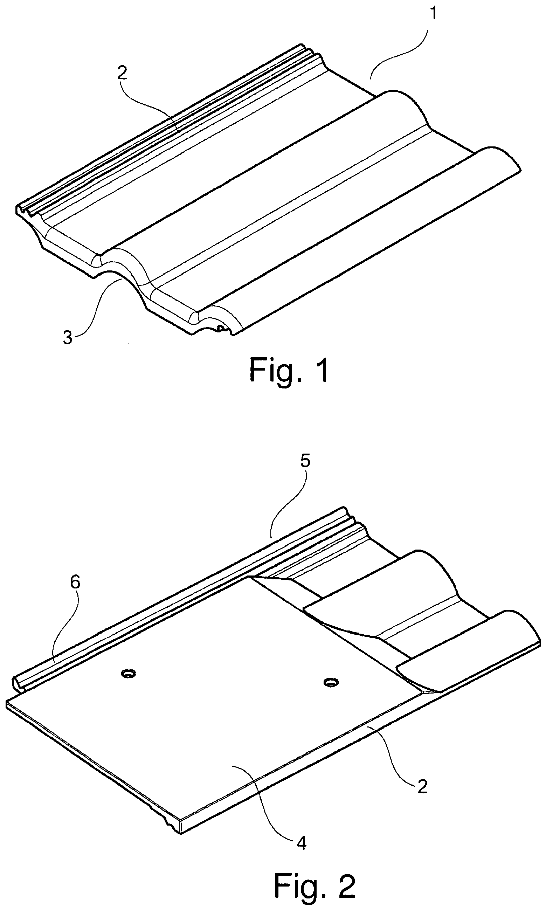

Der in Figur 1 gezeigte Dachziegel 1 hat eine Oberseite 2 und eine Unterseite 3. Die in Figur 1 gezeigte Darstellung ist eine Abbildung eines von einer nachzurüstenden Dachfläche entnommenen Dachziegels. Hierzu wurde der vom Dach entnommene Ziegel digitalisiert (3D-Scan) und Beschädigungen wurden im gescannten Abbild korrigiert. Als Alternative kann auch ein Datensatz eines Dachziegelherstellers dienen, der die Form des Dachziegels beschreibt.

Um einen derartigen Dachziegel 1 mit einem Solarmodul zu versehen, wird zunächst die digitale Form so überarbeitet, dass eine ebene Fläche 4 zum Anbringen eines Solarmoduls entsteht, die nach Anbringen des in seiner Form überarbeiteten Dachziegels 5 auf dem Dach der Sonneneinstrahlung ausgesetzt ist. Hierzu wird das digitale Abbild des Dachziegels so digital überarbeitet, dass später eine optimale Fläche 4 zum Anbringen des Solarmoduls an einem Dachstein bereitgestellt werden kann. Alle Anschlussstücke an andere Ziegel wie Falzen oder Nuten bleiben erhalten, damit der neue Dachstein mechanisch weiterhin in das alte System passt. Außerdem werden Bohrungen 6 und 7 vorgesehen.

Anschließend wird beispielsweise durch Kopierfräsen eine Positivform aus Metall hergestellt. Diese Metallform dient der Herstellung der Gießform (Negativform) im Vakuum-Tiefziehverfahren:

Die Gießformen (Negativformen) werden aus Kunststoff-Folien tief gezogen und sehen aus wie stabile Kunststoff-Blisterverpackungen. Die Metallform ist für die Produktion einer Vielzahl derartiger Blisterformen (Giessformen) geeignet. Des Weiteren werden Negativ-Formteile aus Styropor hergestellt, in welche die Blister eingelegt werden können. Die Blisterformen werden in die Styroporformteile eingelegt, dann z.B. in einem Metallrahmen eingespannt und zu Blöcken zusammengefasst. Jede der Formen besitzt eine Einfüllöfnung und einen Steiger als Öffnung, durch die Luft und überschüssiges Giesmaterial entweichen kann. Zum Ausformen werden die Kunststoffblisterformen dem Metallrahmen entnommen und die Formhälften so vom Dachsteinkörper getrennt.

Die auf die Dachsteine aufzubringenden Zellmatrizen werden zentral in großer Stückzahl hergestellt und z.B. per Paketdienst an den Herstellungsort der Dachsteingrundkörper verbracht.

Als Einkapselungsmaterial wird ein spezielles flüssiges Silikon verwendet. Die erste Silikonschicht wird mittels eines automatischen Dispensers aufgetragen und thermisch vorvernetzt. Darauf wird die Zellmatrix aufgelegt und vom Dispenser mit einer zweiten Schicht Einkapselungsmaterial bedeckt. Danach wird die Frontglasscheibe (2 bis 4 mm Floatglas) aufgelegt und ein weiteres Mal thermisch vernetzt. Die Verklebung fuhrt zu einer optimalen Haftung zwischen den Schichten von der Glasschicht bis zum Grundkörper und führt gleichzeitig zu einer witterungsbeständigen Verkapselung der Solarmatrix. In entsprechender Weise kann auch die Zellmatrix auf die Frontglasscheibe aufgelegt werden und letztlich der Dachstein auf die Zellmatrix.

Das Verfahren funktioniert auch andersrum: Als Einkapselungsmaterial wird ein spezielles flüssiges Silikon verwendet. Die erste Silikonschicht wird mittels eines automatischen Dispensers auf die Frontglasscheibe (2 bis 4 mm Floatglas) aufgetragen. Darauf wird die Zellmatrix aufgelegt und thermisch vernetzt. Danach wird der Beton Grundkörper vom Dispenser mit einer zweiten Schicht Einkapselungsmaterial bedeckt. Darauf wird die Frontglasscheibe samt Zellmatrix aufgelegt und ein weiteres Mal thermisch vernetzt. Die Verklebung führt zu einer optimalen Haftung zwischen den Schichten von der Glasschicht bis zum Grundkörper und führt gleichzeitig zu einer witterungsbeständigen Verkapselung der Solarmatrix.

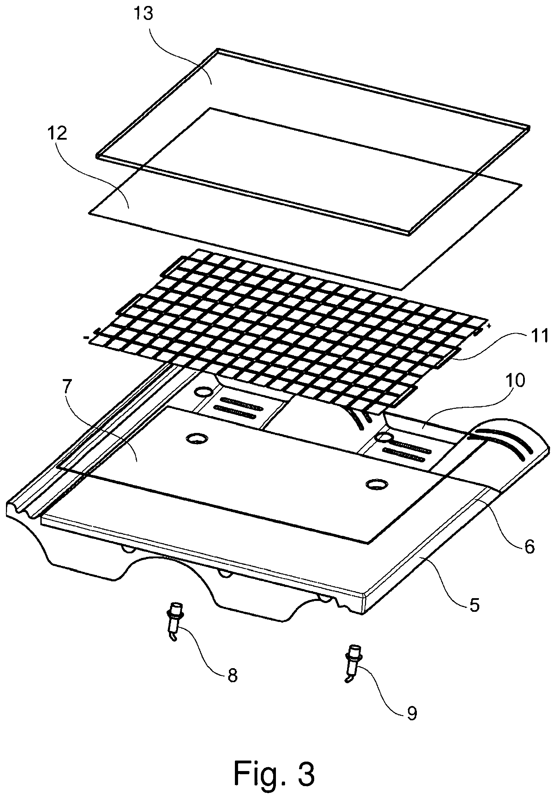

Die Figur 3 zeigt mit kurzen Kabeln verbundene Kontakte 8 und 9 die durch Löcher 7 und 8 im Grundkörper 5, dem Dachsteinrohling, gesteckt werden können. Darauf liegt eine Einbettungsschicht aus Silikon, in die die Solarmatrix 11 eingebettet ist. Darüber liegt eine weitere Einbettungsschicht 12 aus Silikon, über der eine Frontglasscheibe 13 liegt.

Auf der Rückseite des Grundkörpers liegen nun durch die Löcher geführte elektrische Kabel, die vorzugsweise bereits vor der Durchführung durch die Löcher des Grundkörpers bereits mit Kontakten versehen sind. Die Kabel sind mit der Solarmatrix verbunden.

Letztlich wird der Solardachstein mit einer Seriennummer beispielsweise als Datamatrix-Code versehen, um eine Nachverfolgbarkeit und Einhaltung der Normen zu gewährleisten.

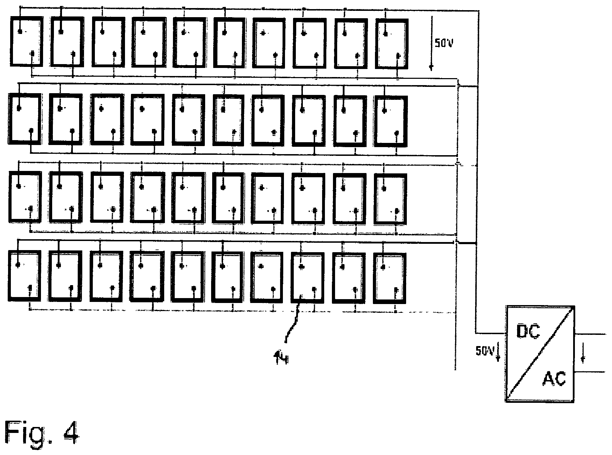

Der so gefertigte Solardachstein hat je nach Größe eine Leistung von ca. 8 bis 12 W. Durch die Verwendung der Vielzahl (ca. 50 bis 100) kleiner Siliziumzellen gibt der Solardachstein eine Spannung von ca. 50 Volt und einen Strom von nur etwa 0,2 Ampere ab. Die Verschaltung zeit schematisch die Figur 4.

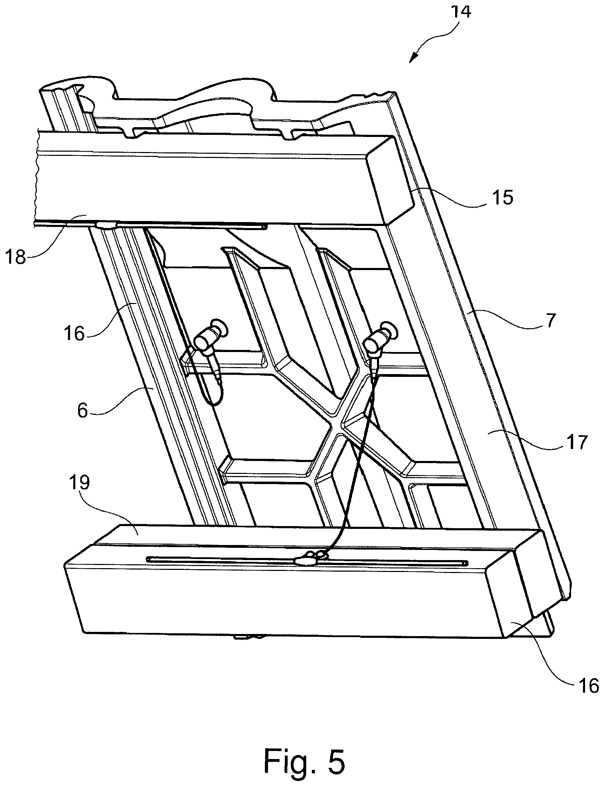

Diese Solardachsteine 14 werden, wie in Figur 5 gezeigt, zwischen zwei Dachlatten 15 und 16 am Dach befestigt. Dabei wird ein Kabel durch ein Loch 6 und ein Kabel durch ein Loch 7 aus dem Solardachstein 14 herausgeführt und mittels eines Kontaktes jeweils an ein Kabel 16 bzw. 17 angeschlossen. Die Kabel sind für maximal 10 Ampere ausgelegt und benötigen daher nur einen Querschnitt von 4 mm². Die beabstandete Anordnung der Löcher 6 und 7 und der Kabel 16 und 17 auf der Rückseite des Dachsteins 14 erleichtert den Anschluss an die parallel zueinander verlaufenden Kabel 18 und 19.

Die beabstandete Führung der Kabel 18 und 19 auf der Ober- und Unterseite der Dachlatte stellt einen effektiven Schutz gegen Kurzschlüsse dar und vermindert dadurch die Brandgefahr. Eine feste Verbindung zwischen kurzen Kabeln 16 bzw. 17 und Kabeln 18 bzw. 19 führt zu zwei sich gegenüber liegenden Kabelsträngen mit jeweils mehreren Stichleitungen, an die die Solarmodule 14 direkt angeschlossen werden können.

Die Kabel 18 und 19, zwischen denen jeweils mehrere Dachsteine angeschlossen sind, werden zu einem Wechselrichter 20 geführt, der in Figur 4 gezeigt ist. Derartige Wechselrichter 20, an die jeweils mehrere Stränge mit Solardachsteinen 14 angeschlossen sind, können beispielsweise unter der Dachhaut oder in Dachnähe angebracht werden. Die Wechselrichter sind standardisiert auf eine Leistung von 2 kW und eine Wechselspannungsabgabe von z.B. 240V AC oder 380V AC. Sie können daher auf der Wechselspannungsebene wiederum in beliebiger Anzahl parallel geschaltet werden.

Gleichspannungsabgabe von z.B. 400 Volt. Sie können daher auf einer 400 Volt Schiene wiederum in beliebiger Anzahl parallel geschaltet werden. Die 400 Volt Leitung führt beispielsweise in den Keller und wird dort über einen Wechselrichter in 400 Volt Wechselspannung umgerichtet und ins Netz eingespeist.

## Patentansprüche

1. Dachstein (1) mit einem Solarmodul (11) und einem plattenförmigen Grundkörper aus Gussmaterial, wobei der Grundkörper mindestens zwei Löcher aufweist, in denen Leitungen geführt sind, ***dadurch gekennzeichnet, dass*** das Solarmodul auf maximal 60 Volt Spannung und circa 6 bis 20 Watt Leistung ausgelegt ist, wobei das Solarmodul (11) ca. 50 bis 100 kleine Siliziumzellen aufweist und eine Spannung von ca. 50 Volt und einen Strom von nur etwa 0,2 Ampere abgibt.

2. Dachstein nach Anspruch 1, ***dadurch gekennzeichnet, dass*** die Leitungen elektrische Leitungen sind.

3. Dachstein nach Anspruch 1 oder 2, ***dadurch gekennzeichnet, dass*** die Leitungen gegen das Gussmaterial abgedichtet sind.

4. Dachstein nach Anspruch 3, ***dadurch gekennzeichnet, dass*** das Gussmaterial ein anorganisches Gussmaterial ist.

5. Dachstein nach einem der vorhergehenden Ansprüche, ***dadurch gekennzeichnet, dass*** das Gussmaterial etwa die Farbe des Solarmoduls hat.

6. Dachstein nach einem der vorhergehenden Ansprüche, ***dadurch gekennzeichnet, dass*** die Löcher Kanäle senkrecht zur plattenförmigen Erstreckung des Grundkörpers bilden.

7. Dachstein nach einem der vorhergehenden Ansprüche, ***dadurch gekennzeichnet, dass*** die Löcher Kanäle längs zur plattenförmigen Erstreckung des Grundkörpers bilden.

8. Dachstein nach einem der vorhergehenden Ansprüche, ***dadurch gekennzeichnet, dass*** das Solarmodul eine Glasscheibe aufweist.

9. Dachstein nach einem der vorhergehenden Ansprüche, ***dadurch gekennzeichnet, dass*** er einen Grundkörper aus Beton, ein darauf angeordnetes Dichtmaterial, eine darauf angeordnete Solarmatrix und eine darauf angeordnete Glasscheibe aufweist.

10. Dachstein nach Anspruch 9, ***dadurch gekennzeichnet, dass*** die Glasscheibe eine Dicke von weniger als 4 mm aufweist und aus ungehärtetem Glas hergestellt ist.

11. Dachstein insbesondere nach einem der vorhergehenden Ansprüche, ***dadurch gekennzeichnet, dass*** auf der Seite des Solarmoduls Stege angeordnet sind.

12. Anordnung aus Dachsteinen mit einem plattenförmigen Grundkörper, ***dadurch gekennzeichnet, dass*** die Dachsteine (5) über eine Parallelschaltung miteinander verbunden sind und jeweils ein Solarmodul (11) aufweisen, das auf maximal 60 Volt Spannung und circa 6 bis 20 Watt Leistung ausgelegt ist, wobei die Solarmodule (11) ca. 50 bis 100 kleine Siliziumzellen aufweisen und eine Spannung von ca. 50 Volt und einen Strom von nur etwa 0,2 Ampere abgeben.

13. Anordnung nach Anspruch 12, ***dadurch gekennzeichnet, dass*** die Dachsteine zu Blöcken mit jeweils 1 bis 3 kW, vorzugsweise etwa 2 kW zusammengefasst sind.

14. Anordnung nach Anspruch 12 oder 13, ***dadurch gekennzeichnet, dass*** die Dachsteine zwischen Dachlatten angeordnet sind, Kabel vom Dachstein zu an den Dachlatten geführten Leitungen führen und diese Leitungen mehr als 3 cm zueinander beabstandet sind.

15. Verfahren zum Herstellen eines Dachsteins nach einem der Ansprüche 1 bis 11, ***dadurch gekennzeichnet, dass*** ein Dachziegel oder Dachstein so überarbeitet wird, dass auf einer Oberseite eine ebene Fläche zum Anbringen eines Solarmoduls entsteht, zum Modell eine Gussform erstellt wird, in der Dachziegelgrundkörper gegossen werden, und je ein Solarmodul am Grundkörper befestigt wird.

16. Verfahren nach Anspruch 15, ***dadurch gekennzeichnet, dass*** die Gussform einen Blister aus Kunststoff aufweist.

17. Verfahren nach Anspruch 15 oder 16, ***dadurch gekennzeichnet, dass*** auf dem Grundkörper eine Zellmatrix aus Siliziumzellen mit einer Dichtschicht eingebettet wird, auf das noch weiche Dichtbett eine Frontscheibe aus Glas gelegt wird und elektrische Anschlüsse durch Löcher im Dachstein geführt werden.

18. Verfahren nach Anspruch 15 oder 16, ***dadurch gekennzeichnet, dass*** auf eine Frontscheibe aus Glas eine Zellmatrix aus Siliziumzellen mit einer Dichtschicht eingebettet wird, auf das noch weiche Dichtbett ein Grundkörper gelegt wird und elektrische Anschlüsse durch Löcher im Dachstein geführt werden.

## Claims

1. A roof tile (1) with a solar module (11) having a panel-shaped base body made from cast material, wherein the base body has at least two holes, in which lines are routed, ***characterised in that*** the solar module is designed for a maximum voltage of 60 volts and an output of about 6 to 20 watts, wherein the solar module (11) comprises about 50 to 100 small silicon cells and delivers a voltage of about 50 volts and a current of only about 0.2 amps.

2. The roof tile according to claim 1, ***characterised in that*** the lines are electrical lines.

3. The roof tile according to claim 1 or 2, ***characterised in that*** the lines are sealed off against the cast material.

4. The roof tile according to claim 3, ***characterised in that*** the cast material is an inorganic cast material.

5. The roof tile according to any one of the preceding claims, ***characterised in that*** the cast material has roughly the colour of the solar module.

6. The roof tile according to any one of the preceding claims, ***characterised in that*** the holes form channels perpendicular to the panel-shaped extension of the base body.

7. The roof tile according to any one of the preceding claims, ***characterised in that*** the holes form channels lengthwise relative to the panel-shaped extension of the base body.

8. The roof tile according to any one of the preceding claims, ***characterised in that*** the solar module comprises a glass pane.

9. The roof tile according to any one of the preceding claims, ***characterised in that*** it comprises a basic body made of concrete, a sealing material arranged on top of the latter, a solar matrix arranged on top of the latter and a glass pane arranged on top of the latter.

10. The roof tile according to claim 9, ***characterised in that*** the glass pane has a thickness of less than 4 mm and is produced from non-toughened glass.

11. The roof tile in particular according to any one of the preceding claims, ***characterised in that*** tabs are arranged on the side of the solar module.

12. An arrangement of roof tiles having a panel-shaped base body, ***characterised in that*** the roof tiles (5) are connected to one another via a parallel circuit and each comprise a solar module (11), which is designed for a maximum voltage of 60 volts and an output of about 6 to 20 watts, wherein the solar module (11) comprises about 50 to 100 small silicon cells and delivers a voltage of about 50 volts and a current of only about 0.2 amps.

13. The arrangement according to claim 12, ***characterised in that*** the roof tiles are combined into blocks with in each case 1 to 3 kW, preferably about 2 kW.

14. The arrangement according to claim 12 or 13, ***characterised in that*** the roof tiles are arranged between roof battens, cables lead from the roof tile to lines installed in the roof battens and these lines are spaced apart from one another by more than 3 cm.

15. A method for producing a roof tile according to any one of claims 1 to 11, ***characterised in that*** a clay roof tile or concrete roof tile is modified such that a flat surface is created on an upper side to enable a solar module to the fitted thereon, a casting mould is created from the model, in which roof tile base bodies are cast, and one solar module is fastened to each base body.

16. The method according to claim 15, ***characterised in that*** the casting mould comprises a blister made of plastic.

17. The method according to claim 15 or 16, ***characterised in that*** a cell matrix comprising silicon cells with a sealing layer is embedded on the base body, a front pane of glass is placed on the sealing bed while it is still soft and electrical connectors are passed through holes in the roof tile.

18. The method according to claim 15 or 16, ***characterised in that*** a cell matrix of silicon cells with a sealing layer is embedded on a front pane of glass, a base body is placed on the sealing bed while it is still soft and electrical connectors are passed through holes in the roof tile.

## Revendications

1. Tuile en béton (1) avec un module solaire (11) et un corps de base en forme de panneau en matériau moulé, sachant que le corps de base comporte au moins deux trous, dans lesquels sont passés des conducteurs, ***caractérisée en ce que*** le module solaire est conçu pour une tension maximale de 60 Volt et une puissance d'environ 6 à 20 Watt, sachant que le module solaire (11) comporte environ 50 à 100 petites cellules de silicium et fournit une tension d'environ 50 Volt et un courant de seulement environ 0,2 Ampère.

2. Tuile en béton selon la revendication 1, ***caractérisée en ce que*** les conducteurs sont des conducteurs électriques.

3. Tuile en béton selon la revendication 1 ou 2, ***caractérisée en ce que*** les conducteurs sont étanchéifiés contre le matériau moulé

4. Tuile en béton selon la revendication 3, ***caractérisée en ce que*** le matériau moulé est un matériau moulé minéral.

5. Tuile en béton selon l'une quelconque des revendications précédentes, ***caractérisée en ce que*** le matériau moulé a à peu près la couleur du module solaire.

6. Tuile en béton selon l'une quelconque des revendications précédentes, ***caractérisée en ce que*** les trous forment des conduits perpendiculairement à l'extension en forme de panneau du corps de base.

7. Tuile en béton selon l'une quelconque des revendications précédentes, ***caractérisée en ce que*** les trous forment des conduits le long de l'extension en forme de panneau du corps de base.

8. Tuile en béton selon l'une quelconque des revendications précédentes, ***caractérisée en ce que*** le module solaire comporte un panneau en verre.

9. Tuile en béton selon l'une quelconque des revendications précédentes, ***caractérisée en ce qu'***elle comporte un corps de base en béton, un matériau d'étanchéité disposé dessus, une matrice solaire disposée dessus et un panneau en verre disposé dessus.

10. Tuile en béton selon la revendication 9, ***caractérisée en ce que*** le panneau en verre comporte une épaisseur de moins de 4 mm et est fabriquée en verre non trempé.

11. Tuile en béton selon l'une quelconque des revendications précédentes, ***caractérisée en ce que*** des nervures sont disposées sur le côté du module solaire.

12. Ensemble constitué de tuiles en béton avec un corps de base en forme de panneau, ***caractérisé en ce que*** les tuiles en béton (5) sont reliées entre elles par un circuit parallèle et comportent respectivement un module solaire (11), qui est conçu pour une tension maximale de 60 Volt et une puissance d'environ 6 à 20 Watt, sachant que les modules solaires (11) comportent environ 50 à 100 petites cellules de silicium et fournissent une tension d'environ 50 Volt et un courant de seulement environ 0,2 Ampère.

13. Ensemble selon la revendication 12, ***caractérisé en ce que*** les tuiles en béton sont regroupées en blocs avec respectivement 1 à 3 kW, de préférence environ 2 kW.

14. Ensemble selon la revendication 12 ou 13, ***caractérisé en ce que*** les tuiles de béton sont disposées entre les lattes de toit, des câbles vont de la tuile de béton aux conducteurs passés sur les lattes de toit et ces conducteurs sont à distance les uns des autres de plus de 3 cm.

15. Procédé de fabrication d'une tuile en béton selon l'une quelconque des revendications 1 à 11, ***caractérisé en ce qu***'une tuile plate ou tuile de béton est remaniée de telle sorte que sur une face supérieure, il est créé une surface plane pour monter un module solaire, une forme moulée est établie pour modèle dans laquelle sont moulés des corps de base de tuile plate et un module solaire est respectivement fixé sur le corps de base.

16. Procédé selon la revendication 15, ***caractérisé en ce que*** la forme moulée comporte une coque en matière plastique.

17. Procédé selon la revendication 15 ou 16, ***caractérisé en ce qu'***une matrice cellulaire de cellules de silicium avec une couche d'étanchéité est encastrée sur le corps de base, un panneau avant en verre est posée sur le lit d'étanchéité encore mou et des connexions électriques sont passées à travers les trous dans la tuile de béton.

18. Procédé selon la revendication 15 ou 16, ***caractérisé en ce qu***'une matrice cellulaire de cellules de silicium avec une couche d'étanchéité est encastrée sur un panneau avant en verre, un corps de base est posé sur le lit d'étanchéité encore mou et des connexions électriques sont passées à travers les trous dans la tuile de béton.
